Europäisches Patentamt

European Patent Office

Office européen des brevets

(11) Veröffentlichungsnummer: **0 031 292**
**A2**

# (12) EUROPÄISCHE PATENTANMELDUNG

(21) Anmeldenummer: 80710031.8

(22) Anmeldetag: 30.10.80

(51) Int. Cl.³: **F 16 C 35/06**
**F 16 C 19/54**

(30) Priorität: 03.11.79 DE 2944426

(43) Veröffentlichungstag der Anmeldung:
01.07.81 Patentblatt 81/26

(84) Benannte Vertragsstaaten:
BE CH DE FR GB IT LI SE

(71) Anmelder: AUTZ & HERRMANN Metallwaren- und
Maschinenfabrik
Postfach 10 11 20
D-6900 Heidelberg 1(DE)

(72) Erfinder: Autz, Helmut
Bergstrasse 152
D-6900 Heidelberg 1(DE)

(74) Vertreter: Patentanwälte Dipl.-Ing. W. Scherrmann
Dr.-Ing. R. Rüger
Webergasse 3 Postfach 348
D-7300 Esslingen (Neckar)(DE)

(54) Abstandring.

(57) Die Erfindung bezieht sich auf einen Abstandring, der zwischen zwei Maschinenteilen in Wälzlagern angeordnet ist und diese auf einen bestimmten Abstand hält, wobei dieser für unterschiedliche Durchmesser und Ringdicken ausgeführt werden kann und auch bei großem Durchmesser und großer Wanddicke bei geringem Eigengewicht ein genaues Distanzmaß und eine hohe Steifigkeit aufweist.

Fig. 1

EP 0 031 292 A2

Titel: "Abstandring"

Die Erfindung bezieht sich auf einen Abstandring, der zwischen zwei Maschinenteilen wie Wälzlagern angeordnet ist und diese auf einen bestimmten Abstand hält.

Derartige Ringe werden im Maschinenbau dann verwendet, wenn z.B. zwischen zwei Kugellagern eine Verspannung derselben mit bestimmtem Abstand erfolgen soll. Die Abstandringe wurden bisher vorwiegend aus handelsüblichem Rohrmaterial gefertigt, z.B. durch Drehen oder Bohren. Diese Bearbeitungsverfahren sind jedoch sehr teuer und insbesondere dann unwirtschaftlich, wenn große Durchmesser hergestellt werden müssen. In diesem Fall ist die Beschaffung des Materials oft sehr schwierig und u.U. muß der Abstandring aus vollem Material herausgearbeitet werden, so daß sehr viel Verspanarbeit geleistet werden muß.

Bei dünnwandigem Material kann dieses Verspanen nur mit sehr geringem Vorschub erfolgen, da sonst der Ring zum Schwingen neigt. Aus diesem Grunde ist oft noch eine mechanische Nachbearbeitung durch Bohren oder Fräsen erforderlich, die ebenfalls kostenintensiv ist. Um eine Zugänglichkeit des Schmierstoffes über den Abstandring zu den Lagerstellen zu ermöglichen, müssen häufig noch zusätzliche Bohrungen angebracht werden.

Die Aufgabe der Erfindung ist es, einen Abstandring zu schaffen, der mit geringen Kosten herzustellen ist, für unterschiedliche Durchmesser und Ringdicken ausgeführt werden kann und der auch bei großem Durchmesser und großer Wanddicke bei geringem Eigengewicht ein genaues Distanzmaß einzuhalten vermag.

Die Aufgabe wird gemäß den kennzeichnenden Teilen der Ansprüche 1 und 2 gelöst. Derartige Abstandringe haben den Vorteil, daß bei geringen Kosten die unterschiedlichsten Ringdicken ausgeführt werden können. Es ist hierfür lediglich erforderlich, Berg und Tal der gewellten Form entsprechend hoch herzustellen, um die notwendige Gesamtstärke zu erreichen. Hierzu müssen die Werkzeuge der Presse entsprechend tief in das Blechmaterial eintauchen. Die offene Form des Abstandringes gemäß Anspruch 1 läßt ohne Mehrkosten das Öl hindurchfließen und erleichtert die Montage der Ringe. Außerdem kann der Ring leicht federnd, d.h. mit leichter Vorspannung in der Bohrung oder auf der Welle festsitzen. Die offene Stelle des Ringes läßt sich an jeder gewünschten Stelle vorsehen. Ein weiterer Vorteil der erfindungsgemäßen Ausführung ist, daß für hohe Genauigkeitsanforderungen eine Nachbehandlung, d.h. ein Arrondieren erfolgen kann. Durch die gewellte Form des Ringes wird das Eigengewicht im Durchschnitt etwa nur ein Drittel eines vollen Ringes betragen, so daß überall wo Gewichtsprobleme im Vordergrund stehen, z.B. bei schwingenden oder hin- und hergehenden Massen, das geringe Gewicht sich vorteilhaft auswirkt.

In den Unteransprüchen sind vorteilhafte Ausbildungen des Erfindungsgegenstandes wiedergegeben.

Ausführungsbeispiele der Erfindung sind in den Zeichnungen schematisch dargestellt.

Es zeigt:

Fig. 1    einen Längsschnitt durch eine Lagerung mit erfindungsgemäßen Abstandringen,

Fig. 2    einen Querschnitt durch diese Lagerung,

Fig. 3    die Wellenform des Ausgangsmaterials und

Fig. 4    eine Draufsicht auf die Wellenform mit zusätzlichen Ölbohrungen.

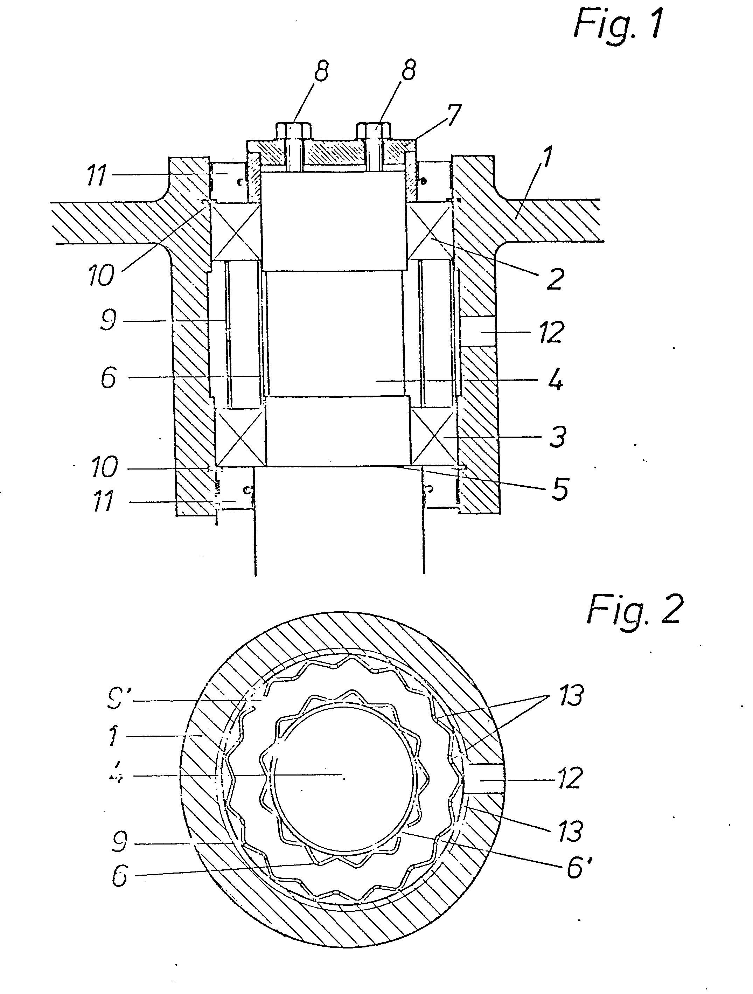

Bei der in Figur 1 gezeigten Ausführung handelt es sich um die drehbare Lagerung eines Maschinenteils 1, bei dem es sich z.B. um ein
Zahnrad handeln kann. In bekannter Weise ist das Maschinenteil 1
über Kugellager 2, 3 auf einem feststehenden Achszapfen 4 gelagert.
Das Kugellager 3 liegt an einem Ansatz 5 am Achszapfen 4 an und wird
über den Abstandring 6 und das Kugellager 2 von einer Klemmscheibe 7
gehalten. Die Klemmscheibe 7 ist über zwei Schrauben 8 am Achszapfen 4 befestigt.

Zwischen den Außenringen der beiden Kugellager 2, 3 befindet sich
ein weiterer Abstandring 9, so daß das Maschinenteil 1 über die Seegerringe 10 axial auf den Kugellagern gesichert ist. Damit die Lagerung
öldicht ausgeführt ist, sind an beiden Stirnseiten Simmerringe 11 vorgesehen.

In Figur 2 ist die Wellenform der Abstandringe 6 und 9 zu erkennen.
Beide Ringe weisen eine offene Form auf (bei 6' und 9'). Um die Kugellager mit Öl zu versorgen, ist im Maschinenteil 1 eine Bohrung 12
vorgesehen, so daß das Öl sich durch eine Vielzahl Ölbohrungen 13
in dem äußeren Abstandring 9 den Kugellagern 2 und 3 zugeführt werden kann.

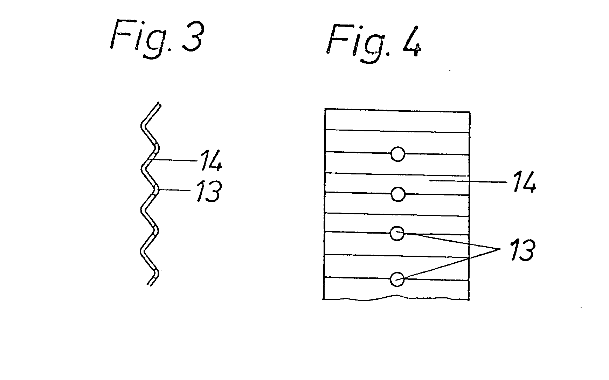

Figur 3 zeigt den in Wellform gepreßten Blechstreifen 14, bei dem bereits die Ölbohrungen 13 vorhanden sind.

Figur 4 zeigt die Draufsicht auf diesen Streifen. Nachdem die Well-form geprägt ist, wird der Streifen zum Ring gebogen, entsprechend dem gewünschten Durchmesser. Als Material für die Ringe läßt sich neben Eisenmaterialien auch Aluminium, Messing und dergl. verwenden. Auch lassen sich die Abstandringe in offener und geschlossener Form in ihrer Länge nacharbeiten. Außerdem ist es möglich, gewisse Durchmesserdifferenzen auszugleichen.

## ANSPRÜCHE

1. Abstandring, der zwischen zwei Maschinenteilen wie Wälzlagern angeordnet ist und diese auf einem bestimmten Abstand hält, dadurch gekennzeichnet,

   daß der Abstandring (6,9) aus einem wellenförmig geprägten Blechstreifen (14) besteht, der nach dem Prägen in Ringform gebogen wird.

2. Abstandring, der zwischen zwei Maschinenteilen wie Wälzlagern angeordnet ist und diese auf einem bestimmten Abstand hält, dadurch gekennzeichnet,

   daß der Abstandring (6,9) aus einem wellenförmig geprägten, geschlossenen Blechrohr besteht und auf seiner Länge abgetrennt wird.

3. Abstandring nach Anspruch 1, dadurch gekennzeichnet,

   daß der wellenförmig geprägte Blechstreifen in Rundform gebogen wird, derart, daß in Umfangsrichtung gesehen zwischen den beiden Ringenden ein geringer Abstand (6', 9') verbleibt.

4. Abstandring nach Anspruch 1 und 2, dadurch gekennzeichnet,

   daß die Höhe der Wellenform der Dicke des benötigten Abstandringes entspricht.

5. Abstandring nach Anspruch 1 und 2, dadurch gekennzeichnet,

   daß der Durchmesser des Abstandringes gegenüber seiner Aufnahme differiert, derart, daß der Abstandring unter Federspannung ein- bzw. aufgeschoben wird.

6. Abstandring nach Anspruch 1 und 2,

    d a d u r c h  g e k e n n z e i c h n e t ,

    daß die genaue Länge nach dem Biegen des Abstandringes nachgearbeitet wird.

7. Abstandring nach Anspruch 1 und 2,

    d a d u r c h  g e k e n n z e i c h n e t ,

    daß der Abstandring über seinen Umfang eine Vielzahl Ölbohrungen aufweist.

8    8    7

11

1

10

2

9

12

6

4

3

10

5

11

*Fig. 2*

9'

13

1

4

12

13

9

6'

6

# Fig. 3

14
13

# Fig. 4

14

13